# EUROPÄISCHE PATENTSCHRIFT

(11) **EP 1 725 745 B1**
(45) Veröffentlichungstag und Bekanntmachung des Hinweises auf die Patenterteilung: **19.09.2007**
(21) Anmeldenummer: 05802597.4
(22) Anmeldetag: 21.10.2005
(51) Int. Cl.: F01L 1/344, F01L 13/00, F16D 3/10

(54) **LAGERUNG ZWISCHEN ZWEI KOAXIALEN NOCKENWELLEN INSBESONDERE FÜR KRAFTFAHRZEUGMOTOREN**
SUPPORT BETWEEN TWO COAXIAL CAMSHAFTS ESPECIALLY FOR MOTOR VEHICLES
SUPPORT ENTRE DEUX ARBRES A CAMES COAXIAUX DESTINE NOTAMMENT A DES MOTEURS DE VEHICULES AUTOMOBILES

(30) Priorität: 09.11.2004 DE 102004054301
(43) Veröffentlichungstag der Anmeldung: 29.11.2006
(73) Patentinhaber: MAHLE Ventiltrieb GmbH, 70376 Stuttgart (DE)
(72) Erfinder: HENTSCHEL, Tilo, 73095 Albershausen (DE); LECHNER, Martin, 70378 Stuttgart (DE); SCHNEIDER, Falk, 70825 Münchingen (DE)
(74) Vertreter: Patentanwalts-Partnerschaft Rotermund + Pfusch + Bernhard
(86) Internationale Anmeldenummer: PCT/DE2005/001888
(87) Internationale Veröffentlichungsnummer: WO 2006/050686

(56) Entgegenhaltungen:
- EP-A- 0 254 058
- EP-A- 1 234 954
- DE-A1- 4 226 798
- FR-A- 2 843 997

## Beschreibung

Die Erfindung betrifft eine Nockenwelle für insbesondere Kraftfahrzeugmotoren mit um die Nockenwellenachse über begrenzte Umfangswinkel gegeneinander verdrehbaren Nocken nach dem Oberbegriff des Patentanspruchs 1. Solche Nockenwellen sind als verstellbare beziehungsweise phasenverstellbare Nockenwellen bekannt. Sie ermöglichen eine Veränderung der Steuerzeiten der Gaswechselventile eines Verbrennungsmotors. Siehe zum Beispiel DE 42 26 798 A1.

Die Erfindung beschäftigt sich mit dem Problem, eine solche Nockenwelle rationell mit hoher Fertigungsgenauigkeit herstellen zu können.

Gelöst wird dieses Problem in erster Linie durch eine Nockenwelle mit den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, die Außen- und Innenwelle jeweils axial absatzfrei herstellen zu können. Sofern für ein Zusammenfügen von Innen- und Außenwelle Anbauelemente mit der Innen- oder Außenwelle, insbesondere der Außenwelle zu verbinden sind, soll nach dem betreffenden Verbinden keine Nachbearbeitung an den verbundenen Teilen mehr erforderlich sein. Es soll vielmehr möglich sein, die Nockenwelle aus einzelnen bereits fertig bearbeiteten Teilen zusammenzusetzen und zwar einschließlich eines mit der Nockenwelle zu verbindenden Antriebselementes.

Durch die an der Innenwelle jeweils endseitig anzubringenden Anbauelemente lässt sich auf einfache Weise eine axiale Fixierung zwischen Innen- und Außenwelle erreichen. Besonders einfach wird eine solche Fixierung dadurch erreicht, dass die Außenwelle kürzer als die Innenwelle ausgebildet ist, so dass die axial fixierend wirkenden ersten Anbauelemente jeweils an den Enden der Innenwelle aufgepresst, aufgeschrumpft oder mittels alternativer Verfahren gefügt werden können. Um in dieser Form gefügt werden zu können, sind die betreffenden ersten Anbauelemente insbesondere ringförmig ausgebildet.

Die Anbauelemente können an beiden Enden der Nockenwelle praktisch gleichartig ausgebildet sein, indem jeweils ein Paar Anbauelemente vorgesehen ist, das aus einem ersten, fest mit der Innenwelle verbundenen und einem zweiten fest mit der Außenwelle verbundenen Anbauelement besteht.

Besonders vorteilhaft ist jedoch eine Ausbildung, bei der lediglich an der Antriebsseite der Nockenwelle ein aus einem ersten und einem zweiten Anbauelement bestehendes Anbauelementepaar notwendig ist, während an dem anderen Ende der Nockenwelle lediglich ein erstes fest mit der Innenwelle zu verbindendes Anbäuelement erforderlich ist.

Das erste Anbauelement ist vorteilhafterweise an der Antriebsseite der Nockenwelle axial über das betreffende Ende der Innenwelle abstehend ausgebildet. Durch ein solches ringförmiges Abstehen ist es möglich, in diesem Ringbereich eine mit der Innenwelle zu verbindende Antriebswelle eines Antriebselementes radial zu zentrieren.

Eine mit der Innenwelle zu verbindende Antriebswelle eines Antriebselementes kann kraftschlüssig über eine die Antriebswelle axial durchgreifende Kopfschraube kraftschlüssig an die Innenwelle angeschlossen werden. Insbesondere für eine vorbestimmbare Drehwinkelzuordnung zwischen der Antriebswelle eines Antriebselementes und der Innenwelle kann in dem gegenseitigen stirnseitigen Anschlussbereich eine radial ausgerichtete Nut- und Federverbindung vorgesehen werden. Möglich ist es allerdings auch, die Drehwinkelzuordnung über einen längs der Nockenwellenachse parallel verlaufenden in die miteinander zu verbindenden Bauteile eingreifenden Passstift zu erreichen.

Um eine Drehwinkelverstellung zwischen der Innen- und Außenwelle erreichen zu können, ist das Antriebselement mit hierzu an sich bekannten Verstellmitteln ausgerüstet. Derjenige Teil des Antriebselementes, der durch diese bekannten Verstellmittel gegenüber der Antriebswelle drehwinkelverstellbar ist, kann über einen parallel zur Nockenwelleachse verlaufenden Passstift mit einem zweiten Anbauteil drehfest verbunden werden. Der Passstift greift dabei in gegenüberliegende Bohrungen in dem Antriebselement einerseits und dem zweiten Antriebselement andererseits ein.

Liegt eine Nockenwellenausbildung vor, bei der einenends der Nockenwelle ein aus einem ersten und einem zweiten Anbauelement bestehendes Anbauelementepaar vorliegt und an dem zweiten Ende lediglich ein fest mit der Innenwelle verbundenes erstes Anbauelement vorhanden ist, so kann durch an den gegenüberliegenden Enden der Nockenwelle an einerseits dem zweiten und andererseits dem ersten Anbauelement angebrachte Messinstrumente die gegenseitige Drehwinkellage zwischen Innen- und Außenwelle einfach gemessen und gegebenenfalls zur Steuerung der Drehwinkelverstellung zwischen Innen- und Außenwelle herangezogen werden.

Vorteilhafte, nachstehend noch näher erläuterte Ausführungsbeispiele sind in der Zeichnung schematisch dargestellt.

In dieser zeigen
- Fig. 1: einen Längsschnitt durch eine Nockenwelle mit einem angeschlossenen Antriebselement,
- Fig. 2: einen Längsschnitt durch eine Nockenwelle mit einem angeschlossenen Antriebselement in einer alternativen Ausführungsform.

Eine verstellbare Nockenwelle eines Kraftfahrzeugmotors, bei der die Drehwinkellage der Nocken in an sich bekannter Weise gegeneinander verändert werden kann um unterschiedliche Steuerzeiten für die zu steuernden Gaswechselventile zu erhalten, besitzt eine Außenwelle 1 und eine konzentrisch in dieser angeordnete Innenwelle 2. Diese beiden Wellen 1 und 2 sind - wie nachstehend noch näher erläutert wird - gegeneinander verdrehbar gelagert.

Zur Erzielung einer gegenseitigen Drehwinkelverstellung der Nocken, von denen in der Zeichnung lediglich schematisch und beispielhaft zwei Nocken 3 und 4 angedeutet sind, sind diese Nocken nicht mit einer gleichen Welle 1, 2 verbunden. Bei zwei gegeneinander drehwinkelveränderbaren Nocken, wie beispielsweise den Nocken 3 und 4, ist der Nocken 3 fest mit der Außenwelle 1 und der Nocken 4 über einen Stift 5 fest mit der Innenwelle 2 verbunden. Der Stift 5 durchgreift in der Außenwelle 1 eine in Umfangsrichtung langlochartig verlaufende Ausnehmung 5. Auf der Außenwelle 1 kann der fest mit der Innenwelle 2 verbundene Nocken 4 gleiten, das heißt der Nocken 4 ist auf der Außenwelle 1 geführt. Werden die Wellen 1 und 2 relativ zueinander verdreht, so erfahren die beiden Nocken 3 und 4 eine entsprechende Drehwinkelveränderung gegeneinander, die in der Praxis auch als Phasenverstellung bezeichnet wird.

Die Außenwelle 1 ist als ein kreiszylindrisches Rohr mit durchgehend gleichen Innen- und Außendurchmessern ausgebildet. Die Innenwelle 2 besteht in dem gezeichneten Beispiel aus Vollmaterial und besitzt einen kreiszylindrischen Außenmantel mit über die Länge gleichmäßigem Durchmesser. Die Innenwelle 2 kann alternativ auch als kreiszylindrisches Rohr mit durchgehend gleichen Durchmessern ausgebildet sein.

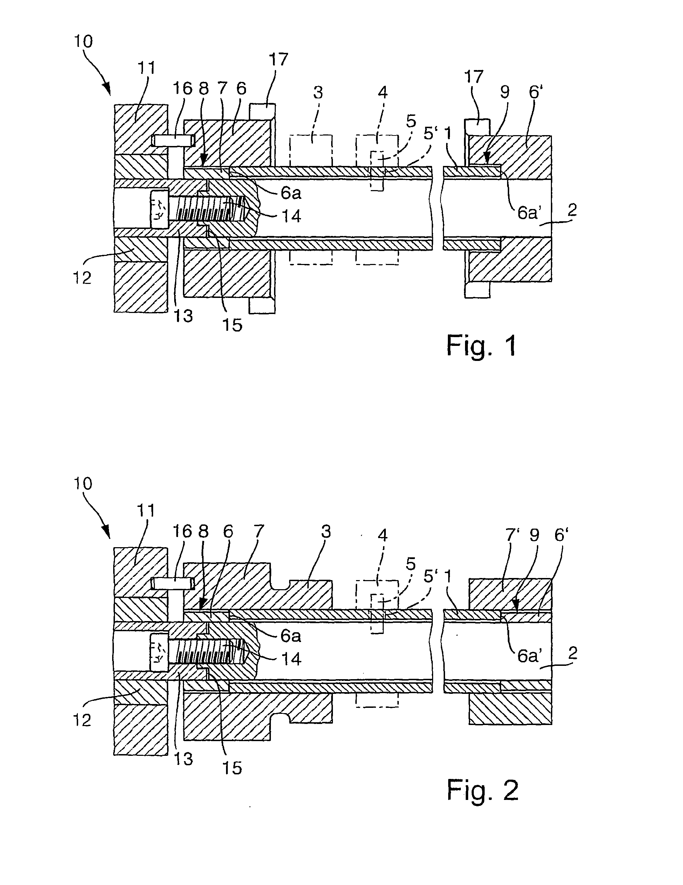

Die gegenseitige Lagerung von Innen- und Außenwelle 2, 1 sowie die axiale Fixierung dieser beiden Wellen 1, 2 gegeneinander ist bei dem gezeichneten Beispiel in Fig. 1 wie folgt ausgeführt.

Auf das linke Ende der Innenwelle 2 ist ein kreiszylindrischer Ring als ein erstes Anbauelement 6 gefügt. Dieses ringförmige Anbauelement 6 ragt über das zugeordnete Ende der Innenwelle 2 axial hinaus. Ein weiteres ringförmiges Anbauelement 6' ist auf das rechte Ende der Innenwelle 2 gefügt. Durch die beiden als Axiallager wirkenden Stirnflächen 6a, 6a' dieser auf die Innenwelle 2 gefügten ersten Anbauelemente 6, 6' ist die Außenwelle 1 gegenüber der Innenwelle 2 axial fixiert. Auf das linke Ende der Außenwelle 1 ist axial nach außen überstehend ein zweites Anbauelement 7 in der Form eines Ringes aufgeschrumpft. Gelagert ist die Innenwelle 2 gegenüber der Außenwelle 1 in zwei Lagerbereichen 8 und 9. Der Lagerbereich 8 ist gebildet durch das erste und zweite Anbauelement 6, 7. Der zweite Lagerbereich 9 liegt zwischen einem Außenmantelbereich der Außenwelle 1 und dem ersten, an dem rechten Ende der Welle 2 angebrachten Anbauelement 6'. Eine Lagerung der Außenwelle 1 direkt auf der Innenwelle 2 existiert nicht, das heißt zwischen der Außen-und Innenwelle 1, 2 kann vorzugsweise Spiel bestehen. Damit ist die gesamte Innenmantelfläche der Außenwelle ohne Funktion und fertigungstechnisch einfach herstellbar. Durch die vorstehend beschriebenen Lage- und Fixierelemente zur gegenseitigen Lagerung und Fixierung von Außen- und Innenwelle 1, 2 ergibt sich der Vorteil, dass die Nockenwelle aus einfachen, fertig bearbeiteten Teilen komplettiert werden kann, wodurch an der komplettierten Nockenwelle keine Nachbearbeitung mehr erforderlich ist. Ebenso kann auf Einstellvorgänge verzichtet werden. Die Fügeverbindungen zwischen.den Anbauelementen 6, 6' und 7 einerseits und den jeweils zugehörigen Wellen 1, 2 andererseits sind äußerst rationell fertigbar, vorzugsweise als Schrumpf- oder Pressverbindung.

An die Nockenwelle greift ein Antriebselement 10 an. Das Antriebselement 10 ist in an sich bekannter Weise derart aufgebaut, dass ein radial äußerer Bereich 11 gegenüber einem Zentralbereich 12 gegeneinander drehwinkelverstellbar ist. Der Zentralbereich besitzt eine nach außen axial vorstehende Antriebswelle 13 mit einem kreiszylindrischen Außendurchmesser. Diese Antriebswelle 13 ist über eine Kopfschraube 14 kraftschlüssig mit der linken Stirnseite_der Innenwelle 2 verbunden, wobei das Gewinde der Kopfschraube 14 in die Welle 2 eingeschraubt ist. Radial zentriert gegenüber der Innenwelle 2 ist die Antriebswelle 13 durch das axial von der Innenwelle abstehende, ringförmig ausgebildete erste Anbauelement 6.

Für eine vorbestimmbare Drehwinkellage der Antriebswelle 13 gegenüber der Innenwelle 2 ist in den Anschlagbereich zwischen der Antriebswelle 13 und der Innenwelle 2 eine Nut-und Federverbindung 15 mit einer radialen Erstreckung vorgesehen. Anstelle einer solchen Nut- und Federverbindung kann auch ein parallel zur Nockenwellenachse verlaufender Passstift vorgesehen werden, der in zugeordneten Passbohrungen der miteinander verbundenen Teile, nämlich der Antriebswelle 13 einerseits und der Innenwelle 2 andererseits eingreift.

Der radial äußere Bereich 11 des Antriebselementes 10 ist mit dem zweiten Anbauelement 7 über einen Passstift 16 drehwinkelfest verbunden. Dieser Passstift 16 greift in zugeordnete Bohrungen in einerseits dem radial äußeren Bereich 11 des Antriebselementes 10 und andererseits des zweiten Anbauelementes 7 passgenau ein.

Da die Anbauelemente 6', 7 axial derart gegenüber liegen, dass einerseits das zweite Anbauelement 7 mit der äußeren Welle 1 und andererseits das erste Anbauelement 6' mit der Innenwelle 2 verbunden ist, kann durch an diesen beiden Anbauelementen 7, 6' angebrachte Messinstrumente 17 die relative Drehwinkelverstellung zwischen Innen- und Außenwelle 2, 1 einfach gemessen werden. Diese Messwerte können zur Steuerung der Nockenwellenverstellung herangezogen oder auch nur zur Kontrolle der Drehwinkelverstellung benutzt werden. Einsetzbar sind beliebige, an sich bekannte Messinstrumente, mit denen Drehwinkelveränderungen feststellbar sind.

Fig. 2 zeigt eine alternative Ausführungsform für die Lagerung der Innenwelle 2 gegenüber der Außenwelle 1. Diese unterscheidet sich von der ersten Ausführungsform nach Fig. 1 in erster Linie durch die Art der gegenseitigen Lagerung von Innen- und Außenwelle 2, 1 an dem von dem Antriebselement 10 entfernt liegenden Ende dieser Wellen 1, 2. Die alternative Lagerung mit einem ersten Antriebselement 6' und einem zugeordneten zweiten Antriebselement 7' entspricht hier praktisch derjenigen, die bei der Ausführung nach Fig. 1 an dem dem Antriebselement 10 zugewandten Ende der Wellen 1, 2 realisiert ist. Als zusätzlicher Unterschied ist das dem Antriebselement 10 benachbart liegende zweite Anbauelement 7 einstückig mit einem fest auf der Außenwelle 1 gefügten Nocken 3 ausgebildet.

### Bezugszeichenliste

- 1: Außenwelle
- 2: Innenwelle
- 3: Nocken auf Außenwelle
- 4: Nocken verbunden mit Innenwelle
- 5: Stift
- 5': Langloch
- 6, 6': erste Anbauelemente
- 6a, 6a': Stirnflächen der ersten Anbauelemente
- 7, 7': zweites Anbauelement
- 8: linker Lagerbereich
- 9: rechter Lagerbereich
- 10: Antriebselement
- 11: radial äußerer Bereich des Antriebselementes
- 12: Zentralbereich
- 13: Antriebswelle
- 14: Kopfschraube
- 15: Nut-Federverbindung
- 16: Passstift
- 17: Messinstrumente

## Patentansprüche

1. Nockenwelle für insbesondere Kraftfahrzeugmotoren mit um die Nockenwellenachse über begrenzte Umfangswinkel gegeneinander verdrehbaren Nocken, bei der
- konzentrisch ineinander angeordnet sind eine Innen- und eine Außenwelle (2; 1),
- die gegeneinander verdrehbaren Nocken (3, 4) aus ersten und zweiten Nocken bestehen, von denen die ersten Nocken (4) fest mit der Innenwelle- (2) und die zweiten Nocken (3) fest mit der Außenwelle (1) verbunden sind,
- die Innen- und Außenwelle (2, 1) gegeneinander gelagert sind,
**gekennzeichnet durch** die Merkmale
- die Innenwelle (2) besitzt eine gegenüber der Außenwelle (1) größere Länge,
- die axiale Fixierung zwischen Innen- und Außenwelle (2, 1) ist über mit den Enden der Innenwelle (2) fest verbundene erste Anbauelemente (6, 6') gegeben,
- die ersten Anbauelemente (6, 6') besitzen kreiszylindrische Lagerflächenbereiche (8, 9),
- die kreiszylindrischen Lagerflächenbereiche (8, 9) der ersten Anbauelemente (6, 6') sind als Lagerflächen (8, 9) für die Lagerung der Innenwelle (2) gegenüber der Außenwelle (1) ausgebildet.

2. Nockenwelle nach Anspruch 1,
**dadurch gekennzeichnet,**
**dass** die den kreiszylindrischen Lagerflächenbereichen (8, 9) der Innenwelle (2) zugeordneten Gegenlagerflächen (8, 9) der Außenwelle (1) sich an zweiten, fest mit der Außenwelle verbundenen, zweiten Anbauelementen (7, 7') befinden.

3. Nockenwelle nach Anspruch 1 oder 2,
**dadurch gekennzeichnet,**
**dass** die Verbindungen der ersten und zweiten Anbauelemente (6, 6'; 7, 7') mit jeweils der Innen- beziehungsweise der Außenwelle (2, 1) als Press- beziehungsweise Schrumpfverbindungen ausgebildet sind.

4. Nockenwelle nach Anspruch 1 oder 3, soweit auf Anspruch 1 rückbezogen,
**dadurch gekennzeichnet,**
**dass** die radiale Lagerung zwischen Innen- und Außenwelle (2, 1) gegeben ist durch ein Zusammenwirken von
- einenends einem ersten mit einem zweiten Anbauteil (6, 7) und
- anderenends einem ersten Anbauteil (6') mit einem Bereich der Außenmantelfläche der Außenwelle (1).

5. Nockenwelle nach einem der vorhergehenden Ansprüche,
**dadurch gekennzeichnet,**
**dass** die Außen- und Innenwelle (1, 2) durchgehend absatzfreie zylindrische Außen- und/oder Innenmantelflächen besitzen.

6. Nockenwelle nach einem der vorhergehenden Ansprüche,
**dadurch gekennzeichnet,**
**dass** ein an einem Ende der Nockenwelle angebrachtes erstes Anbauelement (6) als ein dieses betreffende Ende der Innenwelle (2) nach axial außen überragender Ring mit inneren und äußeren, jeweils kreiszylindrischen Mantelflächen ausgebildet ist.

7. Nockenwelle nach Anspruch 6 mit einem mit der Innen-und Außenwelle (2, 1) getrennt verbindbaren Antriebselement (10),
**gekennzeichnet durch** die Merkmale,
- von dem Antriebselement (10) steht eine Antriebswelle (13) ab, wobei diese Antriebswelle (13)
- form- und/oder kraftschlüssig mit der Innenwelle (2) verbunden ist und
- in einem axialen Teilbereich ihres Außenumfangs über eine radiale Passung innerhalb des axial von der Innenwelle (2) abstehenden Bereiches des ersten Anbauelementes (6) zentriert ist.

8. Nockenwelle nach einem der vorhergehenden Ansprüche,
**dadurch gekennzeichnet,**
**dass** die Anschlussmittel zwischen der Antriebswelle (13) und der Innenwelle (2) eine stirnseitig angeordnete, radial verlaufende Nut- und Federverbindung (15) umfassen.

9. Nockenwelle nach einem der Ansprüche 1 bis 7,
**dadurch gekennzeichnet,**
**dass** die Anschlussmittel zwischen der Antriebswelle (13) und der Innenwelle (2) mindestens einen parallel zur Nockenwelle verlaufenden, in jeweils eine Passbohrung in den sich gegenüberliegenden Stirnseiten von Antriebs- und Innenwelle (13; 2) eingreifenden Passstift umfassen.

10. Nockenwelle nach einem der vorhergehenden Ansprüche,
**dadurch gekennzeichnet,**
**dass** die Anschlussmittel zwischen der Antriebswelle (13) und der Innenwelle (2) eine Kopfschraube (14) umfassen, mit der die freie Stirnseite der Antriebswelle (13) in Achsrichtung der Nockenwelle kraftschlüssig an die zugeordnete Stirnseite der Innenwelle (2) angedrückt wird.

11. Nockenwelle nach einem der vorhergehenden Ansprüche,
**dadurch gekennzeichnet,**
**dass** der Anschluss des Antriebselementes (10) an die Außenwelle (1) über mindestens einen Passstift (16) gegeben ist, der in sich gegenüberliegenden Bohrungen des zweiten Anbauelementes (7) der Außenwelle (1) einerseits und eines radial äußeren Bereiches (11) des Antriebselementes (10) andererseits formschlüssig eingreift, wobei das Antriebselement (10) in an sich bekannter Weise mit Mitteln versehen ist, durch die eine Drehwinkelverdrehung zwischen Außen- und Innenwelle (2, 1) möglich ist.

12. Nockenwelle nach Anspruch 4,
**dadurch gekennzeichnet,**
**dass** die sich gegenüberliegenden Anbauelemente, nämlich das fest mit der Innenwelle (2) verbundene erste Anbauelement (6') einerseits und das fest mit der Außenwelle (1) verbundene zweite Anbauelement (7) andererseits mit die gegenseitige Drehwinkelstellung dieser Anbauelemente (6', 7) erfassbaren Messinstrumenten (17) versehen sind.

13. Nockenwelle nach einem der vorhergehenden Ansprüche,
**dadurch gekennzeichnet,**
**dass** mindestens ein zweites Anbauelement (7, 7') als Baugruppe oder einstückig mit mindestens einem Nocken (3) verbunden ist und gemeinsam mit der Außenwelle (1) verbunden ist.

14. Nockenwelle nach Anspruch 4 oder 12,
**dadurch gekennzeichnet,**
**dass** das mit der Außenmantelfläche der Außenwelle (1) zusammenwirkende erste Anbauelement (6') als Baugruppe oder einstückig mit mindestens einem Nocken (4) verbunden ist und gemeinsam mit der Innenwelle (2) verbunden ist.

15. Nockenwelle nach Anspruch 4, 12 oder 14,
**dadurch gekennzeichnet,**
**dass** das mit der Außenmantelfläche der Außenwelle (1) zusammenwirkende erste Anbauelement (6') eine Baugruppe aus zwei an den Innenmantelflächen absatzfreien Bauteilen ist und gemeinsam mit der Innenwelle (2) verbunden ist.

## Claims

1. A camshaft for automotive engines, in particular having contra-rotating cams rotating about the camshaft axis over limited circumferential angles, wherein
- an inside shaft (2) and an outside shaft (1) are arranged concentrically one inside the other,
- the contra-rotating cams (3, 4) consist of first and second cams, the first cam (4) of which is fixedly joined to the inside shaft (2) and the second cam (3) of which is fixedly attached to the outside shaft (1),
- the outside shaft (1) and the inside shaft (2) are mounted with respect to one another
**characterized by** the features
- the inside shaft (2) has a greater length than the outside shaft (1),
- the axial attachment between the outside shaft (1) and the inside shaft (2) provided via first add-on elements (6, 6') that are fixedly joined to the ends of the inside shaft (2),
- the first add-on elements (6, 6') have cylindrical bearing face areas (8, 9),
- the cylindrical bearing face areas (8, 9) of the first add-on elements (6, 6') are designed as bearing faces (8, 9) for the bearing of the inside shaft (2) with respect to the outside shaft (1).

2. The camshaft according to Claim 1,
**characterized in that**
the thrust bearing surfaces (8, 9) of the outside shaft (1) assigned to the cylindrical bearing face areas (8, 9) of the inside shaft (2) are situated on the second add-on elements (7, 7') that are fixedly connected to the outside shaft.

3. The camshaft according to Claim 1 or 2,
**characterized in that**
the connections of the first and second add-on elements (6, 6'; 7, 7') to the inside shaft (2) and/or the outside shaft (1) are designed as press fit connections and/or as shrink fit connections.

4. The camshaft according to Claim 1 or 3 inasmuch as it refers back to Claim 1,
**characterized in that**
the radial bearing between the outside shaft (1) and the inside shaft (2) is provided by the cooperation of
- a first add-on part (6) with a second add-on part (7) at one end and
- a first add-on part (6') with an area of the outer lateral surface of the outside shaft (1) at the other end.

5. The camshaft according to any one of the preceding claims,
**characterized in that**
the outside shaft (1) and the inside shaft (2) have continuous cylindrical outside and/or inside lateral surfaces without any shoulders.

6. The camshaft according to any one of the preceding claims,
**characterized in that**
a first add-on element (6) mounted on one end of the camshaft is designed as a ring protruding axially to the outside beyond this respective end of the inside shaft (2) with inside and outside lateral surfaces each in a cylindrical form.

7. The camshaft according to Claim 6 with a drive element (10) that can be connected separately to the outside shaft (1) and the inside shaft (2),
**characterized by** the features
- a driveshaft (13) protrudes away from the drive element (10), whereby this driveshaft (13)
- is connected in a form-fitting and/or friction-locked manner to the inside shaft (2) and
- is centered in a partial axial area of its outside circumference via a radial fit within the area of the first add-on element (6) protruding axially away from the inside shaft (2).

8. The camshaft according to any one of the preceding claims,
**characterized in that**
the connecting means between the driveshaft (13) and the inside shaft (2) include a tongue-and-groove connection (15) running radially on the end.

9. The camshaft according to any one of Claims 1 through 7,
**characterized in that**
the connecting means between the driveshaft (13) and the inside shaft (2) include at least one alignment pin that runs parallel to the camshaft and engages in a fitted bore in the opposing ends of the driveshaft (13) and the inside shaft (2).

10. The camshaft according to any one of the preceding claims,
**characterized in that**
the connecting means between the driveshaft (13) and the inside shaft (2) include a head screw (14) with which the free end face of the driveshaft (13) is pressed in a friction-locked manner against the respective end face of the inside shaft (2) in the axial direction of the camshaft.

11. The camshaft according to any one of the preceding claims,
**characterized in that**
the connection of the drive element (10) to the outside shaft (1) is formed by at least one alignment pin (16) which engages in a form-fitting manner in opposing boreholes in the second add-on element (7) on the outside shaft (1) on the one hand and a radially outer area (11) of the drive element (10) on the other hand, whereby the drive element (10) is provided in a known way with means by which it is possible to adjust the angle of rotation between the outside shaft (1) and the inside shaft (2).

12. The camshaft according to Claim 4,
**characterized in that**
the opposing add-on elements, namely the first add-on element (6') which is fixedly connected to the inside shaft (2) on the one hand and the second add-on element (7) which is fixedly connected to the outside shaft (1) on the other hand are each provided with measurement instruments (17) capable of detecting the mutual angle of rotation settings of these add-on elements (6', 7).

13. The camshaft according to any one of the preceding claims,
**characterized in that**
at least one second add-on element (7, 7') is connected as a module or in one piece to at least one cam (3) and is attached jointly to the outside shaft (1) .

14. Camshaft according to Claim 4 or 12,
**characterized in that**
the first add-on element (6') cooperating with the outside lateral surface of the outside shaft (1) is connected as a module or in one piece to at least one cam (4) and is connected jointly to the inside shaft (2).

15. The camshaft according to Claims 4, 12 or 14,
**characterized in that**
the first add-on element (6') cooperating with the outside lateral surface of the outside shaft (1) is a module consisting of two components without shoulders on the inside lateral surfaces and is jointly connected to the inside shaft (2).

## Revendications

1. Arbre à cames pour en particulier des moteurs de véhicules automobiles, comprenant des cames qui peuvent tourner les unes par rapport aux autres sur des angles inscrits limités autour de l'axe de l'arbre à cames, dans lequel
- un arbre intérieur et un arbre extérieur (2 ; 1) sont disposés concentriquement l'un dans l'autre,
- les cames (3, 4) pouvant tourner les unes par rapport aux autres constituées de premières et de secondes cames, dont les premières cames (4) sont assemblées fixement avec l'arbre intérieur (2) et les secondes cames (3) sont assemblées fixement avec l'arbre extérieur (1),
- l'arbre intérieur et l'arbre extérieur (2, 1) sont supportés l'un par rapport à l'autre,
**caractérisé par** les caractéristiques
- l'arbre intérieur (2) a une longueur supérieure par rapport à celle de l'arbre extérieur (1),
- la fixation axiale entre l'arbre intérieur et l'arbre extérieur (2, 1) est obtenue par l'intermédiaire de premiers éléments rapportés (6, 6') assemblés fixement avec les extrémités de l'arbre intérieur (2),
- les premiers éléments rapportés (6, 6') ont des zones de surfaces d'appui (8, 9) cylindriques circulaires,
- les zones de surfaces d'appui (8, 9) cylindriques circulaires des premiers éléments rapportés (6,6') sont configurées sous forme de surfaces d'appui (8, 9) pour le support de l'arbre intérieur (2) par rapport à l'arbre extérieur (1).

2. Arbre à cames suivant la revendication 1, **caractérisé en ce que** les surfaces d'appui antagonistes (8, 9) de l'arbre extérieur (1), associées aux zones de surfaces d'appui (8, 9) cylindriques circulaires de l'arbre intérieur (2), se situent sur de seconds éléments rapportés (7, 7') assemblés fixement avec l'arbre extérieur.

3. Arbre à cames suivant la revendication 1 ou 2, **caractérisé en ce que** les assemblages des premiers et des seconds éléments rapportés (6, 6' ; 7, 7') avec respectivement l'arbre intérieur ou l'arbre extérieur (2, 1) sont réalisés sous forme d'assemblages par pression ou d'assemblages frettés.

4. Arbre à cames suivant la revendication 1 ou 3, dans la mesure de sa relation avec la revendication 1, **caractérisé en ce que** le support radial entre l'arbre intérieur et l'arbre extérieur (2, 1) est obtenu par une coopération
- d'un premier et d'un second élément rapporté (6, 7) sur une extrémité et
- d'un premier élément rapporté (6') avec une zone de la surface d'enveloppe extérieure de l'arbre extérieur (1) sur l'autre extrémité.

5. Arbre à cames suivant l'une des revendications précédentes, **caractérisé en ce que** l'arbre extérieur et l'arbre intérieur (1, 2) présentent des surfaces d'enveloppe extérieures et/ou intérieures cylindriques continues sans épaulement.

6. Arbre à cames suivant l'une des revendications précédentes, **caractérisé en ce qu'**un premier élément rapporté (6), monté sur une extrémité de l'arbre à cames, est configuré sous forme d'un anneau dépassant axialement vers l'extérieur de cette extrémité concernée de l'arbre intérieur (2), avec des surfaces d'enveloppe intérieures et extérieures respectivement cylindriques circulaires.

7. Arbre à cames suivant la revendication 6, avec un élément d'entraînement (10) qui peut être assemblé séparément avec l'arbre intérieur et l'arbre extérieur (2, 1), **caractérisé par** les caractéristiques,
- un arbre d'entraînement (13) dépasse de l'élément d'entraînement (10), où cet arbre d'entraînement (13)
- est assemblé par coopération de forme et/ou force d'adhérence avec l'arbre intérieur (2) et
- est centré dans une zone partielle axiale de son pourtour extérieur, par l'intermédiaire d'un ajustement radial, à l'intérieur de la zone, qui dépasse dans la direction axiale de l'arbre intérieur (2), du premier élément rapporté (6).

8. Arbre à cames suivant l'une des revendications précédentes, **caractérisé en ce que** les moyens de raccordement entre l'arbre d'entraînement (13) et l'arbre intérieur (2) comportent un assemblage à rainures et languettes (15), disposé du côté frontal et s'étendant dans la direction radiale.

9. Arbre à cames suivant l'une des revendications 1 à 7, **caractérisé en ce que** les moyens de raccordement entre l'arbre d'entraînement (13) et l'arbre intérieur (2) comportent au moins une goupille d'ajustage, qui s'étend parallèlement à l'arbre à cames et s'engage dans respectivement un alésage d'ajustage dans les côtés frontaux en vis-à-vis de l'arbre d'entraînement et de l'arbre intérieur (13 ; 2).

10. Arbre à cames suivant l'une des revendications précédentes, **caractérisé en ce que** les moyens de raccordement entre l'arbre d'entraînement (13) et l'arbre intérieur (2) comportent une vis à tête (14), par laquelle le côté frontal libre de l'arbre d'entraînement (13) est pressé dans la direction axiale de l'arbre à cames, par force d'adhérence, sur le côté frontal associé de l'arbre intérieur (2).

11. Arbre à cames suivant l'une des revendications précédentes, **caractérisé en ce que** la raccordement de l'élément d'entraînement (10) à l'arbre extérieur (1) est obtenu par l'intermédiaire d'au moins une goupille d'ajustage (16), qui s'engage par coopération de forme dans des alésages opposés du second élément rapporté (7) de l'arbre extérieur (1), d'un côté, et d'une zone (11) radiale extérieure de l'élément d'entraînement (10), de l'autre côté, où l'élément d'entraînement (10) est muni de manière connue en soi de moyens qui permettent une rotation angulaire entre l'arbre extérieur et l'arbre intérieur (2, 1).

12. Arbre à cames suivant la revendication 4, **caractérisé en ce que** les éléments rapportés en vis-à-vis, à savoir le premier élément rapporté (6') assemblé fixement avec l'arbre intérieur (2), d'un côté, et le second élément rapporté (7) assemblé fixement avec l'arbre extérieur (1), de l'autre côté, sont munis d'instruments de mesure (17) pouvant détecter la position angulaire de rotation de ces éléments rapportés (6', 7).

13. Arbre à cames suivant l'une des revendications précédentes, **caractérisé en ce qu'**au moins un second élément rapporté (7, 7') est assemblé en tant que sous-groupe ou d'une seule pièce avec au moins une came (3) et est assemblé conjointement avec l'arbre extérieur (1).

14. Arbre à cames suivant la revendication 4 ou 12, **caractérisé en ce que** le premier élément rapporté (6'), coopérant avec la surface d'enveloppe extérieure de l'arbre extérieur (1), est assemblé en tant que sous-groupe ou d'une seule pièce avec au moins une came (4) et est assemblé conjointement avec l'arbre intérieur (2).

15. Arbre à cames suivant la revendication 4, 12 ou 14, **caractérisé en ce que** le premier élément rapporté (6'), coopérant avec la surface d'enveloppe extérieure de l'arbre extérieur (1), est un sous-groupe de deux pièces de construction sans épaulements sur les surfaces d'enveloppe intérieures et est assemblé conjointement avec l'arbre intérieur (2).
